# EUROPÄISCHE PATENTSCHRIFT

(11) **EP 2 812 153 B1**
(45) Veröffentlichungstag und Bekanntmachung des Hinweises auf die Patenterteilung: **27.12.2017**
(21) Anmeldenummer: 13705719.6
(22) Anmeldetag: 06.02.2013
(51) Int. Cl.: B23Q 5/34, B23Q 11/00, B24B 13/00, H02K 41/02, B24B 13/06

(54) **LINEARANTRIEB**
LINEAR DRIVE
ENTRAÎNEMENT LINÉAIRE

(30) Priorität: 06.02.2012 EP 12000763
(43) Veröffentlichungstag der Anmeldung: 17.12.2014
(73) Patentinhaber: Schneider GmbH & Co. KG, 35112 Fronhausen (DE)
(72) Erfinder: SCHNEIDER, Gunter, 35037 Marburg (DE); BÖRNER, Ulf, 35041 Marburg (DE); HOFMANN, Klaus, 61273 Wehrheim (DE)
(74) Vertreter: Von Rohr Patentanwälte Partnerschaft mbB
(86) Internationale Anmeldenummer: PCT/EP2013/000352
(87) Internationale Veröffentlichungsnummer: WO 2013/117327

(56) Entgegenhaltungen:
- EP-A1- 1 378 319
- EP-A1- 1 378 319
- EP-A2- 0 402 011
- EP-A2- 0 402 011
- EP-A2- 2 100 695
- EP-B1- 0 854 769
- DE-A1- 19 810 996
- DE-A1-102005 044 087
- DE-A1-102005 044 087
- US-A1- 2010 045 118

## Beschreibung

Die vorliegende Erfindung betrifft generell die Bearbeitung von vorzugsweise optischen Flächen bzw. Werkstücken, insbesondere Spiegeln oder Linsen, besonders bevorzugt durch Stirndrehen. Insbesondere betrifft die vorliegende Erfindung einen Linearantrieb gemäß dem Oberbegriff des Anspruchs 1 sowie eine Verwendung eines derartigen Linearantriebs zum mechanischen bzw. spanenden Bearbeiten, vorzugsweise Drehen bzw. Stirndrehen, eines vorzugsweise optischen bzw. metallischen Werkstücks, insbesondere einer optischen Fläche oder Linse.

Die vorliegende Erfindung bezieht sich insbesondere auf die spanende Bearbeitung in einer Drehmaschine bzw. auf das Stirndrehen. Mittels eines Linearantriebs, der oft auch als Fast-Tool-Antrieb oder Fast-Tool-Anordnung bezeichnet wird, wird ein Werkzeug, insbesondere ein Drehmeißel oder Drehstahl, in Abhängigkeit von der Drehlage des zu bearbeitenden Werkstücks linear bewegt bzw. zugestellt. Es erfolgt insbesondere eine hin- und hergehende Bewegung, auch als oszillierende Bewegung oder reziprozierende Bewegung bezeichnet. So können insbesondere nicht-rotationssymmetrische Bearbeitungen erfolgen und nicht-rotationssymmetrische Oberflächen bzw. Freiformflächen erzeugt werden, insbesondere um gewünschte optische Eigenschaften eines optischen Bauteils, wie eines Spiegels oder einer Linse, zu realisieren.

Die EP 1 647 360 A2 zeigt einen Linearantrieb im vorgenannten Sinne mit einem linear bewegbaren Läufer, der ein Werkzeug für die Bearbeitung trägt. Der Läufer ist über Blattfedern bewegbar gelagert. Problematisch sind die hohen Kräfte bei hohen Beschleunigungen des Läufers und daraus resultierende Schwingungen und Ungenauigkeiten bei der Bearbeitung.

Die DE 10 2005 052 314 A1 zeigt einen Linearantrieb mit einem luftgelagerten Läufer. Problematisch sind die hohen Kräfte bei hohen Beschleunigungen des Läufers und daraus resultierende Schwingungen und Ungenauigkeiten bei der Bearbeitung.

Die WO 97/13603 A2 offenbart eine Bearbeitungsmaschine zur Bearbeitung von optischen Oberflächen, wobei auf einem steifen Maschinenbett eine Spindel gelagert ist, an der ein Rohling für eine optische Oberflächenbearbeitung gehalten werden kann. Ein erster Linearantrieb trägt ein in Achsrichtung der Spindel bewegbares Drehwerkzeug. Zum dynamischen Massenausgleich weist die Bearbeitungsmaschine einen zweiten Linearantrieb auf, der kolinear zu dem ersten Linearantrieb angeordnet ist und dessen Gehäuse bzw. Stator mechanisch mit dem Gehäuse bzw. Stator des ersten Linearantriebs über das Maschinenbett gekoppelt ist und der in entgegengesetzter Richtung zum ersten Linearantrieb angesteuert wird. Die Bearbeitungsmaschine und die vorgesehenen Linearantriebe bauen sehr groß. Die Linearbetriebe sind relativ träge und insbesondere für eine schnelle, hoch dynamische Bewegung nicht optimiert.

Die DE 198 10 996 A1 offenbart einen impulsentkoppelten Direktantrieb mit einem beweglichen Abtriebsteil und einem zugeordneten Reaktionsteil, der insbesondere als Primärteil mit elektrischen Wicklungen aufgebaut ist. Der Reaktionsteil ist an einem Unterbau beweglich gelagert, so dass bei einer Bewegung des Abtriebsteils der Reaktionsteil eine Gegenbewegung ausführt. Dieser Direktantrieb ist also nur aus einem Linearmotor aufgebaut. Insbesondere ist der Reaktionsteil über ein Federelement mit dem Unterbau gekoppelt. Eine optimale Kompensation bzw. Impulsentkopplung ist so nicht erreichbar.

Die DE 200 19 035 U1 offenbart eine Werkzeugmaschine mit einem linear bewegbaren Schieber, der ein Werkzeug trägt. Um Massenkräfte des senkrecht zu beschleunigenden Schiebers auszuschalten, ist ein Gewichtsausgleich aus zwei gegenläufig arbeitenden Ausgleichsmassen vorgesehen. Die Ausgleichsmassen sind jeweils über mit nicht gezeigten Antrieben verbundene Ritzel mit dem Schieber gekoppelt, wobei die Ritzel einerseits mit Zahnstangen des Schiebers und andererseits mit Zahnstangen der Ausgleichsmassen kämmen. Hier ist also eine mechanische Kopplung des beweglichen Schiebers mit den Ausgleichsmassen und ein rotatorischer Antrieb, insbesondere also kein Direktantrieb, vorgesehen. Ein derartiger Aufbau ist für die insbesondere vorgesehene Bearbeitung von optischen Flächen bzw. Werkstücken ungeeignet bzw. zu langsam.

Die DE 10 2005 044 087 A1 betrifft einen Aktor zur Bewegung eines Werkzeuges, an dem ein Stößel mit einem Werkzeughalter in Axialrichtung beweglich geführt ist, wobei der Stößel mittels eines schnellen Antriebs beweglich ist. Der Stößel ist an der werkzeugnahen Seite durch eine Federlagerung gelagert. An der werkzeugfernen Seite ist der Stößel durch eine zweite Lagerung gelagert, die derart ausgeführt sein kann, dass eine Verdrehsicherung gewährleistet wird.

Die EP 0 402 011 A2 betrifft ein Drehwerkzeug, bei dem ein Werkzeugträger axial zu einem Werkstück hin und von einem Werkstück weg durch ein piezoelektrisches Element bewegt werden kann. Die Lagerung des Werkzeugträgers kann durch eine Luftlagerung erfolgen.

Der vorliegenden Erfindung liegt die Aufgabe zugrunde, einen Linearantrieb und eine Verwendung eines Linearantriebs anzugeben, wobei eine sehr genaue und schnelle Bewegung eines Läufers des Linearantriebs, eine sehr genaue und schnelle Bearbeitung eines Werkstücks, wie einer Linse, und/oder ein kompakter Aufbau ermöglicht wird bzw. werden.

Die obige Aufgabe wird durch einen Linearantrieb gemäß Anspruch 1 oder durch eine Verwendung gemäß Anspruch 14 gelöst. Vorteilhafte Weiterbildungen sind Gegenstand der Unteransprüche.

Ein Aspekt der vorliegenden Erfindung liegt darin, dass der Linearantrieb eine erste Lagerung und eine dazu axial beabstandete, zweite Lagerung für den axial bewegbaren Läufer aufweist, wobei die erste Lagerung den Läufer torsionssteif bzw. nicht drehbar lagert, also gegen Verdrehen führt, und die zweite Lagerung den Läufer drehbar lagert. So kann verhindert werden, dass die Lagerungen unerwünschte Torsionskräfte auf den Läufer ausüben. Dies ist einer leichtgängigen und sehr schnellen Bewegung des Läufers und einer sehr genauen Bearbeitung eines Werkstücks zuträglich. Außerdem ist dies einem einfachen und kompakten Aufbau zuträglich.

Vorzugsweise ist vorgesehen, dass der Linearantrieb einen linear bewegbaren Ausgleichskörper und einen elektrischen Ausgleichantrieb zur Bewegung des Ausgleichskörpers entgegengesetzt zum Läufer aufweist. So ist eine Reduzierung oder sogar Kompensation von insbesondere bei schnellen Bewegungen bzw. hohen Beschleunigungen des Läufers auftretenden Reaktionskräften möglich. Weiter wird eine sehr genaue Bearbeitung des Werkstücks ermöglicht. Der Läufer erstreckt sich in den Ausgleichsantrieb und/oder Ausgleichskörper oder sogar durch diese(n) hindurch. So wird ein außerordentlich kompakter Aufbau des Linearantriebs bzw. einer Bearbeitungsvorrichtung mit einem derartigen Linearantrieb ermöglicht.

Insbesondere weist der Linearantrieb einen elektrischen, als Linearmotor ausgebildeten Läuferantrieb und einen elektrischen, als Linearmotor ausgebildeten Ausgleichsantrieb auf. Der Läuferantrieb bildet also einen linearen Direktantrieb für den Läufer und damit für das zugeordnete Werkzeug. Der Ausgleichsantrieb bildet insbesondere also einen Direktantrieb für den Ausgleichskörper. Der vorschlagsgemäße Linearantrieb weist dementsprechend also vorzugsweise zwei separate Linearmotoren bzw. Direktantriebe auf. Besonders bevorzugt sind die genannten Antriebe bzw. Linearmotoren bzw. deren Spulen derart elektrisch verschaltet, dass bei Fließen eines Stroms automatisch entgegengesetzte Bewegung des Läufers einerseits und des Ausgleichskörpers andererseits bewirkt werden. Vorschlagsgemäß erfolgt also vorzugsweise nur eine elektrische Kopplung der Ausgleichsbewegung des Ausgleichskörpers mit der Bewegung des Läufers bzw. Werkzeugs.

Gemäß einem anderen bevorzugten Aspekt der vorliegenden Erfindung weist der Läufer einen Läuferabschnitt und einen im Querschnitt und/oder in der Außenkontur kleineren Führungsabschnitt auf. Besonders bevorzugt ist der Führungsabschnitt länglich, stabartig und/oder zylindrisch ausgebildet. Dies ermöglicht bei sehr genauer Längsführung des Läufers, insbesondere über zwei axial beabstandete Lagerungen, eine sehr leichte und kompakte Ausbildung des Läufers. Beispielsweise kann die erste Lagerung den Läuferabschnitt und die zweite Lagerung den Führungsabschnitt in Bewegungsrichtung beweglich lagern. So wird ein einfacher und/oder kompakter Aufbau ermöglicht oder unterstützt. Des Weiteren kann der Läufer sehr leicht ausgeführt werden. Dies ist einer schnellen Bewegung sowie einer sehr genauen und schnellen Bearbeitung zuträglich.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: einen schematischen Aufbau einer vorschlagsgemäßen Vorrichtung mit einem vorschlagsgemäßen Linearantrieb;
- Fig. 2: einen Längsschnitt des Linearantriebs; und
- Fig. 3: eine schematische explosionsartige Ansicht des Linearantriebs.

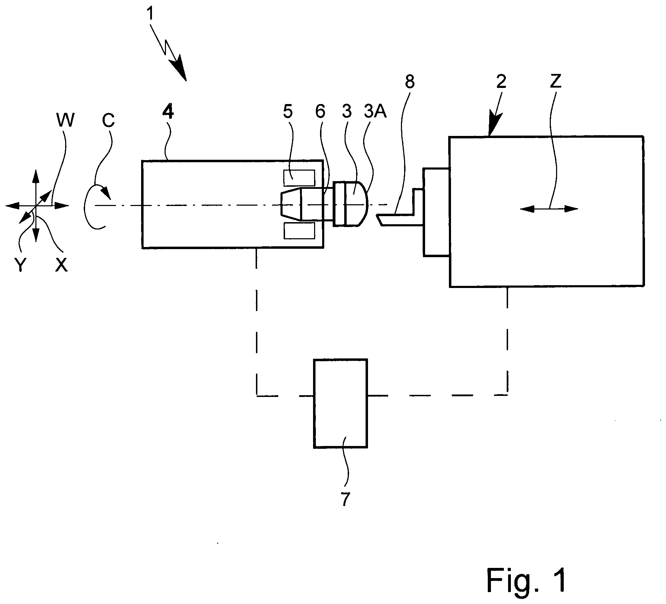

Fig. 1 zeigt schematisch eine vorschlagsgemäße Vorrichtung 1 bzw. einen vorschlagsgemäßen Linearantrieb 2 zum Bearbeiten eines vorzugsweise optischen Werkstücks 3, insbesondere einer optischen Fläche, beispielsweise eines Headup-Displays, Spiegels oder einer Linse. Vorzugsweise erfolgt eine spanende Bearbeitung des Werkstücks bzw. dessen Fläche oder Flachseite 3A durch Drehen, insbesondere durch Stirndrehen.

Vorzugsweise weist die Vorrichtung 1 zur Steuerung oder Regelung der Werkstückspindel 4 und/oder zur Steuerung oder Regelung des Linearantriebs 2 und/oder zu sonstigen Steuerungs- oder Regelungszwecken eine Steuereinrichtung 7 auf, die insbesondere durch eine speicherprogrammierbare Steuerung, CNC-Steuerung (numerische bzw. rechnergestützte Steuerung) oder dergleichen gebildet sein oder eine solche enthalten kann und/oder eine derartige Steuerung steuern kann.

Die Bearbeitung des Werkstücks 3 erfolgt vorzugsweise spanend, insbesondere mittels eines Werkzeugs 8, insbesondere eines Drehmeißels, Drehstahls o. dgl. Das Werkzeug 8 wird vom Linearantrieb 2 gehalten und ist mittels des Linearantriebs 2 relativ zum Werkstück 3 linear in einer Bewegungsrichtung bewegbar, wie durch Doppelpfeil Z in Fig. 1 angedeutet.

Vorzugsweise ist die Werkstückspindel 4 mit dem zu bearbeitenden Werkstück 3 in einer W-Richtung (vorzugsweise in Richtung der Spindelachse bzw. Rotationsachse C) relativ zu dem Werkzeug 8 bzw. Linearantrieb 2 zustellbar bzw. positionierbar und/oder in einer X-Richtung quer oder senkrecht zu der W- oder Z-Richtung bewegbar bzw. verfahrbar. Weiter kann das Werkstück 3 bzw. die Werkstückspindel 4 optional zusätzlich in einer Y-Richtung quer oder senkrecht zur X-Richtung und/oder W- oder Z-Richtung relativ zum Werkzeug 8 bewegbar bzw. verfahrbar sein. Grundsätzlich sind auch andere oder zusätzliche Richtungen und/oder Bewegungsachsen möglich.

Bedarfsweise kann die axiale Ausrichtung der Rotations- bzw. Rundachse C der Werkstückspindel 4 auch schräg zur W-, X- und/oder Y-Richtung bzw. -Achse verlaufen.

Die Richtungen bzw. Achsen W und X verlaufen vorzugsweise zumindest im Wesentlichen horizontal. Die Richtung bzw. Achse Y verläuft vorzugsweise zumindest im Wesentlichen vertikal.

Vorzugsweise dient die Verstellung in Y-Richtung bzw. die Y-Achse lediglich einer Feineinstellung oder Höheneinstellung, um sicherzustellen, dass das Werkzeug 8 beim Quervorschub in X-Richtung durch die Drehachse C bewegbar ist, also das Werkstück 3 bzw. die Flachseite 3A auch im Bereich der Drehachse C bearbeitbar ist.

Besonders bevorzugt ist die Verstellbarkeit in Y-Richtung bzw. die Y-Achse durch ein Festkörpergelenk und/oder einen Antrieb zur ausschließlichen Feineinstellung oder -verstellung gebildet.

Besonders bevorzugt werden eine gerechnete oder gesteuerte W-Achse, X-Achse und/oder Y-Achse bzw. entsprechende Linearachsen gebildet.

Beim Darstellungsbeispiel verläuft die Bewegungsachse bzw. Linearachse Z vorzugsweise zumindest im Wesentlichen parallel zu der Drehachse bzw. Rundachse C des Werkstücks 3. Die Richtung der Z-Achse einerseits und die Richtung der W-Achse bzw. die axiale Ausrichtung der Dreh- bzw. Rundachse C andererseits können parallel zueinander oder geneigt zueinander verlaufen und/oder zueinander einstellbar bzw. neigbar sein, beispielsweise um die Flachseite 3A einer Fresnel-Linse oder eines Fresnel-Spiegels herstellen oder bearbeiten zu können. Bei einer relativen Neigung ist diese vorzugsweise derart begrenzt oder gering, dass das bevorzugte Stirndrehen zur Bearbeitung des Werkstücks 3 in gewünschter bzw. erforderlicher Weise noch erfolgen kann.

Vorzugsweise dient die W-Achse der grundsätzlichen Zustellung von Werkstück und Werkzeug 8, insbesondere über größere Verfahr- oder Zustellwege, beispielsweise bei einer starken Krümmung und einem großen Durchmesser der zu bearbeitenden bzw. herzustellenden Fläche bzw. Flachseite 3A und/oder beispielsweise zum Einspannen oder Wechseln des Werkstücks 3 und/oder Werkzeugs 8. Vorzugsweise erfolgt keine von der Drehlage des Werkstücks 3 bzw. der Drehspindel 4 abhängige Bewegung der W-Achse bzw. in W-Richtung.

Vorzugsweise handelt es sich bei dem Linearantrieb 2 um einen elektrisch arbeitenden Achsantrieb, insbesondere um einen sogenannten Fast-Tool-Antrieb, um das Werkzeug 8 insbesondere in Abhängigkeit von der Drehlage des Werkstücks 3 und/oder in Abhängigkeit des Abstands des Werkzeugs 8 von der Drehachse der Werkstückspindel 4 in seiner Axiallage bzw. Z-Achse zu steuern bzw. schnell vor- und zurückzubewegen. Der Linearantrieb 2 gestattet eine vorzugsweise lineare und/oder gesteuerte bzw. geregelte Bewegung des Werkzeugs 8 und bildet daher vorzugsweise eine gesteuerte oder geregelte Linearachse Z.

Die Linearachse Z bildet im Gegensatz zur W-Achse eine vorzugsweise hochdynamische bzw. schnelle Achse oder Bewegung, insbesondere in Abhängigkeit von der Drehlage des Werkstücks bzw. der Werkstückspindel 4. Der Linearantrieb 2 dient insbesondere also einer sehr schnellen Bewegung des Werkzeugs 8 in Z-Richtung in Abhängigkeit von der Drehlage des Werkstücks mit jedoch verhältnismäßig kleinem Hub. Der maximale Hub bzw. Verfahrweg des Linearantriebs 2 bzw. Werkzeugs 8 beträgt vorzugsweise mehrere mm, insbesondere mehr als 10 mm oder 12 mm, besonders bevorzugt etwa 15 mm, insbesondere bei Bewegungsfrequenzen von mehr als 25 oder 50 Hz und/oder bei Beschleunigungen von mehr als 50 m/s², oder 100 m/s², besonders bevorzugt von etwa 300 m/s². Das Werkzeug 8 kann während einer Umdrehung des Werkstücks 3 auch mehrmals in Z-Richtung vor- und zurückbewegt werden.

Die Steuerung oder Regelung der Z-Achse, also die Bewegung des Läufers 9 und damit Werkzeugs 8, erfolgt vorzugsweise über die Steuereinrichtung 7, insbesondere wobei die Drehlage des Werkstücks 3 über einen nicht dargestellten Winkelgeber o. dgl. insbesondere an oder in der Werkstückspindel 4 erfassbar ist.

Während der Bearbeitung des Werkstücks 3 wird die Linse 3 vorzugsweise relativ zu dem Werkzeug 8 in X-Richtung und/oder Y-Richtung verfahren, um die gewünschte flächenmäßige Bearbeitung, insbesondere einer Fläche bzw. der Flachseite 3A, zu ermöglichen. Hierzu sind die Werkstückspindel 4 und der Linearantrieb 2 entsprechend relativ zueinander verstellbar bzw. verfahrbar, beispielsweise über einen nicht dargestellten Kreuzschlitten o. dgl.

Insbesondere kann eine Bearbeitung erfolgen bzw. ein Aufbau der Vorrichtung 1 vorgesehen sein, wie in der EP 0 849 038 A2 oder DE 10 2009 011 194 A2 beispielsweise beschrieben.

Die Vorrichtung 1 weist vorzugsweise ein nicht dargestelltes Gehäuse, Maschinenbett, Gestell o. dgl. auf, das die Werkstückspindel 4 und den Linearantrieb 2 mittelbar, beispielsweise über einen nicht dargestellten Kreuzschlitten, Drehteller o. dgl., oder unmittelbar trägt.

Grundsätzlich können das Werkstück 3 und das Werkzeug 8 auch vertauscht sein bzw. kann eine kinematische Umkehr vorgesehen werden.

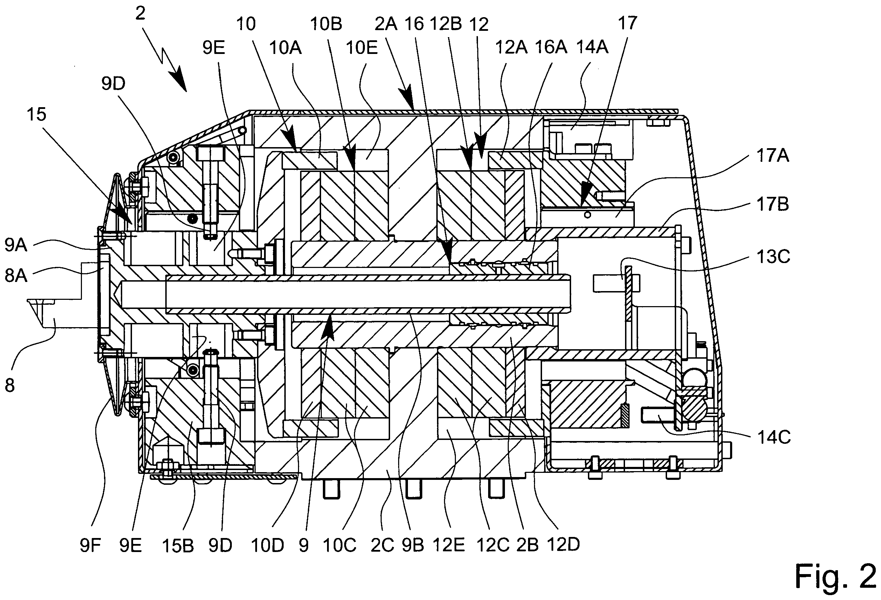

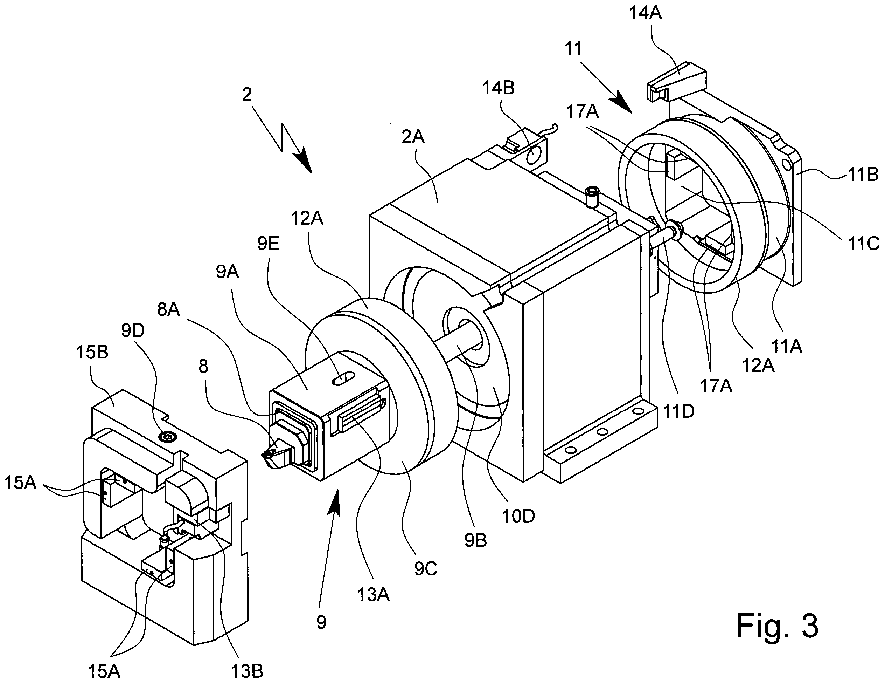

Nachfolgend wird ein bevorzugter Aufbau des vorschlagsgemäßen Linearantriebs 2 näher erläutert. Hierbei wird insbesondere auf den schematischen Schnitt gemäß Fig. 2 und die explosionsartige Darstellung gemäß Fig. 3 Bezug genommen.

Der Linearantrieb 2 weist einen axial bewegbaren Läufer 9 auf. Der Läufer 9 trägt oder bildet eine Aufnahme 8A für das Werkzeug 8. Das Werkzeug 8 ist vorzugsweise also fest mit dem Läufer 9 verbunden oder verbindbar, aber insbesondere wechselbar.

Die axiale Bewegung des Läufers 9 und damit des Werkzeugs 8 verläuft in Z-Richtung. Diese stellt die Bewegungsachse des Linearantriebs 2, des Läufers 9 und des Werkzeugs 8 dar.

Der Läufer 9 weist vorzugsweise einen vorderen bzw. werkzeugseitigen Läuferabschnitt 9A und einen vorzugsweise hinteren Führungsabschnitt 9B auf.

Der Läuferabschnitt 9A weist vorzugsweise einen zumindest im Wesentlichen polygonalen oder rechteckigen, insbesondere zumindest im Wesentlichen quadratischen Querschnitt auf. Beispielsweise ist der Führungsabschnitt 9A zumindest im Wesentlichen quaderförmig ausgebildet. Jedoch sind auch andere Konfigurationen und Formen möglich.

Die Aufnahme 8A zur insbesondere lösbaren Halterung des Werkzeugs 8 ist vorzugsweise am Läuferabschnitt 9A angeordnet. Besonders bevorzugt ist das Werkzeug 8 im Bereich einer Stirnseite am Läufer 9 bzw. Läuferabschnitt 9A angeordnet bzw. gehalten.

Der Führungsabschnitt 9B weist vorzugsweise einen zumindest im Wesentlichen runden Querschnitt auf und/oder ist vorzugsweise zylindrisch ausgebildet. Besonders bevorzugt ist der Führungsabschnitt 9B wellenartig, bolzenartig oder stabartig ausgebildet.

Der Führungsabschnitt 9B ist vorzugsweise wesentlich dünner als der Läuferabschnitt 9A ausgebildet. Insbesondere weist der Führungsabschnitt 9B einen kleineren Durchmesser oder Querschnitt als der Läuferabschnitt 9A auf. Beim Darstellungsbeispiel beträgt der Durchmesser des Führungsabschnitts 9B vorzugsweise weniger als die Hälfte des minimalen oder maximalen Durchmessers des Läuferabschnitts 9A.

Der Führungsabschnitt 9B ist an seinen werkzeugseitigen Ende vorzugsweise von dem Läuferabschnitt 9A aufgenommen, insbesondere in diesen eingesteckt, und/oder vorzugsweise fest mit dem Läuferabschnitt 9A verbunden.

Der Läuferabschnitt 9A ist vorzugsweise aus Metall, insbesondere aus Leichtmetall, besonders bevorzugt aus Aluminium oder einer Aluminiumlegierung, hergestellt.

Der Führungsabschnitt 9B ist vorzugsweise aus Metall, insbesondere Stahl, hergestellt.

Der Linearantrieb 2 weist einen elektrischen Läuferantrieb 10 auf, der dem Läufer 9 zur axialen Bewegung des Läufers 9 zugeordnet ist. Bei dem Läuferantrieb 10 handelt es sich insbesondere um einen Linearmotor zur Bewegung des Läufers 9.

Der Läuferantrieb 10 weist vorzugsweise eine elektrische Spule 10A und eine zugeordnete Magnetanordnung 10B auf. Beim dargestellten und bevorzugten Ausführungsbeispiel ist die Spule 10A vorzugsweise mit dem Läufer 9 bzw. dessen Läuferabschnitt 9A, vorzugsweise über eine Verbindungsplatte 9C, verbunden. Die Spule 10A ist elektrisch betreibbar. Entsprechende elektrische Anschlüsse oder Anschlussleitungen sind aus Vereinfachungsgründen nicht dargestellt.

Die Verbindungsplatte 9C ist vorzugsweise aus einem elektrisch isolierenden und/oder wärmeisolierenden Material hergestellt. Die Spule 10A ist dementsprechend vorzugsweise thermisch und/oder elektrisch gegenüber dem Läufer 9 bzw. Läuferabschnitt 9A isoliert.

Die Verbindungsplatte 9C ist vorzugsweise sehr steif und/oder ringscheibenartig ausgebildet. Jedoch sind auch andere Konfigurationen und Formen möglich.

Die Magnetanordnung 10B ist vorzugsweise fest in ein Gehäuse 2A des Linearantriebs 2 eingebaut, also stationär bzw. unbeweglich eingebaut. Mit anderen Worten, die Magnetanordnung 10B ist im Gegensatz zu der Spule 10A vorzugsweise nicht zusammen mit dem Läufer 9 beweglich.

Durch entsprechende elektrische Ansteuerung der Spule 10A, insbesondere über die Steuereinrichtung 7, gestattet der elektrische Läuferantrieb 10 ein gesteuertes oder geregeltes Bewegen - insbesondere Hin- und Herbewegen - des Läufers 9 und des zugeordneten Werkzeugs 8 in Z-Richtung.

Der Linearantrieb 2 weist vorzugsweise einen linear bewegbaren Ausgleichskörper 11 und einen zugeordneten elektrischen Ausgleichsantrieb 12 auf. Der Ausgleichsantrieb 12 dient einer Bewegung des Ausgleichskörpers 11 entgegengesetzt zum Läufer 9. Besonders bevorzugt ist der Ausgleichskörper 11 koaxial zu dem Läufer 9, also entlang der Z-Achse, bewegbar.

Zur Reduzierung oder Kompensation von insbesondere bei sehr schnellen Bewegungen oder hohen Beschleunigungen des Läufers 9 auftretenden Kräften, Momenten oder Schwingungen ist der Ausgleichskörper 11 vorzugsweise entgegengesetzt zu dem Läufer 9 mittels des Ausgleichsantriebs 12 bewegbar. Es wird insbesondere ein dynamischer Massenausgleich durch entgegen gesetztes Bewegen von vorzugsweise zumindest im Wesentlichen gleich großen Massen gebildet.

Der Ausgleichsantrieb 12 weist vorzugsweise eine elektrische Spule 12A und eine zugeordnete Magnetanordnung 12B auf. Insbesondere handelt es sich bei dem Ausgleichsantrieb 12 um einen elektrischen Linearmotor zur axialen Bewegung des Ausgleichskörpers 11. Die Spule 12A ist vorzugsweise dem Ausgleichskörper 11 zugeordnet, insbesondere mit diesem fest verbunden. Die elektrischen Anschlüsse oder Anschlussleitungen der Spule 12A sind aus Vereinfachungsgründen nicht dargestellt. Die Magnetanordnung 12B ist vorzugsweise fest oder stationär angeordnet, insbesondere in das Gehäuse 2A des Linearantriebs 2 eingebaut.

Der Ausgleichskörper 11 ist vorzugsweise ringartig ausgebildet. Der Ausgleichskörper 11 ist vorzugsweise in axialer Richtung wesentlich kürzer und/oder im Durchmesser größer als der Läufer 9 ausgebildet. Dies ist einem kompakten Aufbau zuträglich.

Der Ausgleichskörper 11 weist vorzugsweise einen Körperabschnitt 11A auf, der vorzugsweise zumindest im Wesentlichen rohrartig oder hülsenartig ausgebildet ist und/oder insbesondere stirnseitig, besonders bevorzugt an dem dem Werkzeug 8 zugewandten Ende, die zugeordnete Spule 12A trägt.

Der Ausgleichskörper 11 weist vorzugsweise einen Führungsabschnitt 11B auf, der insbesondere zumindest im Wesentlichen plattenartig und/oder flanschartig, in der Stirnansicht besonders bevorzugt zumindest im Wesentlichen rechteckig oder quadratisch ausgebildet ist. Vorzugsweise schließt sich der Führungsabschnitt 11B am hinteren bzw. der Spule 12A abgewandten Ende an den Körperabschnitt 11A an.

Der Körperabschnitt 11A weist eine vorzugsweise zumindest im Wesentlichen zylindrische Außenkontur auf. Der Ausgleichskörper 11 oder zumindest dessen Körperabschnitt 11A weist beim Darstellungsbeispiel vorzugsweise eine unrunde, insbesondere im Wesentlichen polygonale oder quadratische Innenkontur und/oder zentrale Durchbrechung 11C auf.

Vorzugsweise sind der Läuferantrieb 10 und der Ausgleichsantrieb 12 entgegengesetzt ausgerichtet und/oder an entgegengesetzten Seiten des Linearantriebs 2 bzw. Gehäuses 2A angeordnet.

Vorzugsweise sind die Spulen 10A und 12A, die Magnetanordnungen 10B und 12B und/oder die Antriebe 10 und 12 zumindest im Wesentlichen baugleich ausgebildet.

Beim Darstellungsbeispiel sind die Spulen 10A und 12A vorzugsweise zumindest im Wesentlichen hohlzylindrisch oder ringartig und/oder als Tauchspulen ausgebildet.

Beim Darstellungsbeispiel sind die Magnetanordnungen 10B und 12B vorzugsweise zumindest im Wesentlichen ringartig ausgebildet. Insbesondere weisen die Magnetanordnungen 10B, 12B jeweils einen oder mehrere Permanentmagnete 10C, 12C und/oder jeweils eine vorzugsweise stirnseitig angeordnete, insbesondere ringscheibenartige Polscheibe 10D, 12D auf.

Der Linearantrieb 2 bzw. das Gehäuse 2A weist vorzugsweise einen insbesondere hülsenartigen Träger 2B auf, der vorzugsweise in dem Gehäuse 2A bzw. einem Gehäuseteil 2C angeordnet oder davon gebildet oder getragen ist und/oder um den herum die Magnetanordnungen 10B und 12B angeordnet sind. Insbesondere trägt der Träger 2B die Magnetanordnungen 10B und 12B. Besonders bevorzugt sind die Magnetanordnungen 10B, 12B entgegengesetzt am Träger 2B angeordnet oder von entgegen gesetzten Seiten auf den Träger 2B aufgeschoben.

Beim Darstellungsbeispiel ist der Träger 2B in eine zentrale Öffnung oder Durchbrechung des Gehäuses 2A bzw. Gehäuseteils 2C eingesetzt und davon gehalten. Vorzugsweise ist der Träger 2B von einer Zwischenwand des Gehäuseteils 2C gehalten, beispielsweise durch eine Öffnung der Zwischenwand gesteckt. Jedoch sind auch andere konstruktive Lösungen möglich.

Vorzugsweise weisen die Polscheiben 10D und 12D der Magnetanordnungen 10B und 12B in entgegengesetzte Richtungen bzw. sind auf entgegengesetzten Stirnseiten angeordnet.

Vorzugsweise besteht der Träger 2B aus einem magnetischen Material, insbesondere Messing.

Die Antriebe 10 und 12 umfassen oder bilden jeweils vorzugsweise eine Tauchspulenanordnung. Insbesondere können die Spulen 10A und 12A in einen entsprechenden Ringraum 10E bzw. 12E eintauchen, bilden also Tauchspulen. Der Ringraum 10E bzw. 12E ist jeweils vorzugsweise zwischen der innenliegenden Magnetanordnung 10B bzw. 12B einerseits und dem Gehäuse 2A oder Gehäuseteil 2C bzw. einer entsprechenden radial beabstandeten Wandung einer korrespondierenden Ausnehmung andererseits gebildet.

Vorzugsweise sind die Spulen 10A und 12A zu der korrespondierenden Magnetanordnung 10B und 12B derart angeordnet und/oder derart ausgebildet, dass diese mit der jeweiligen korrespondierenden Magnetanordnung 10B bzw. 12B wechselwirken können, insbesondere wobei sich die Magnetanordnung 10B bzw. 12B und die zugeordnete Spule 10A bzw. 12A wahlweise magnetisch abstoßen oder anziehen können. Hierdurch wird jeweils ein magnetischer bzw. elektromagnetischer Linearmotor gebildet.

Unter dem Begriff "Linearmotor" ist generell ein linearer Direktantrieb zu verstehen.

Der Linearantrieb 2 weist vorzugsweise also zwei separate Linearmotoren bzw. Antriebe 10 und 12 auf. Diese sind vorzugsweise nur über ihre stationären Magnetanordnungen 10B und 12B mechanisch mit dem Gehäuse 2A bzw. einem Gehäuseteil 2C des Linearantriebs 2 gekoppelt.

Die Bewegungen des Läufers 9 einerseits und des Ausgleichskörpers 11 andererseits sind vorzugsweise mechanisch entkoppelt und insbesondere nur antriebsmäßig durch elektrische Kopplung oder Steuerung bzw. Regelung der Antriebe 10, 12 korreliert bzw. gekoppelt.

Vorzugsweise sind die Antriebe 10 und 12 bzw. deren Spulen 10A und 12A derart elektrisch verschaltet, dass bei Fließen eines Stroms automatisch entgegengesetzte Bewegungen des Läufers 9 einerseits und des Ausgleichskörpers 11 andererseits bewirkt werden.

Durch die entgegengesetzte Bewegung des Ausgleichskörpers 11 können die insbesondere bei schnellen Bewegungen oder hohen Beschleunigungen des Läufers 9 auftretenden Reaktionskräfte, Momente und Schwingungen zumindest weitestgehend reduziert oder kompensiert werden, so dass allenfalls geringe resultierende Kräfte, Momente und/oder Schwingungen von dem Linearantrieb 2 bzw. dessen Gehäuse 2A auf ein entsprechendes Gestell, einen Unterbau, ein Maschinenbett o. dgl. der Vorrichtung 1 einwirken.

Besonders bevorzugt entspricht die Masse des Ausgleichskörpers 11 zumindest im Wesentlichen der Gesamtmasse von Läufer 9, Werkzeug 8 und Verbindungsplatte 9C.

Bei zumindest im Wesentlichen gleicher oder sogar identischer Masse des Läufers 9 und der damit verbundenen, sich also mitbewegenden Teile einerseits und des Ausgleichskörpers 11 und der damit verbundenen, sich mitbewegenden Teile andererseits kann erreicht werden, dass die vom Ausgleichskörper 11 durchgeführte Ausgleichsbewegung entgegensetzt zu der Bewegung des Läufers 9 den gleichen oder zumindest im Wesentlichen gleichen Hub erfordert. Insbesondere kann dann eine entsprechende Steuerung oder Regelung sehr einfach realisiert werden. Jedoch ist es grundsätzlich auch möglich, dass die sich entgegengesetzt bewegenden Massen, also der Läufer 9 und die damit verbundenen Teile einerseits und der Ausgleichskörper 11 und die damit verbundenen Teile andererseits, unterschiedlich sind.

Eine Eichung oder Kalibrierung der Vorrichtung 1 bzw. des Linearantriebs 2 kann durch entsprechende Ansteuerung des jeweiligen Antriebs 10 bzw. 12 und entsprechende Erfassung und Auswertung der jeweiligen Bewegung oder Position des Läufers 9 bzw. Ausgleichskörpers 11 erfolgen.

Zur Erfassung der Position des Läufers 9 und damit des Werkzeugs 8 weist der Linearantrieb 2 vorzugsweise eine erste Messeinrichtung 13 auf. Die Messeinrichtung 13 arbeitet vorzugsweise optisch. Beim Darstellungsbeispiel weist die Messeinrichtung 13 einen Maßstab 13A und einen zugeordneten Sensor oder Lesekopf 13B auf, wie in Fig. 3 schematisch angedeutet. Der Maßstab 13A ist vorzugsweise am Läufer 9 bzw. dessen Läuferabschnitt 9A angeordnet, insbesondere an einer äußeren Flachseite angeordnet oder einer Ausnehmung aufgenommen.

Die erste Messeinrichtung 13 kann alternativ oder zusätzlich auch einen Näherungsschalter 13C aufweisen, insbesondere wie in Fig. 2 angedeutet, besonders bevorzugt um für Kalibrierungszwecke eine bestimmte Lage oder Endlage des Läufers 9 und damit des Maßstabs 13A erfassen zu können.

Der Linearantrieb 2 weist vorzugsweise eine zweite Messeinrichtung 14 zur Erfassung der Position des Ausgleichskörpers 11 auf, wie in Fig. 2 angedeutet.

Die zweite Messeinrichtung 14 arbeitet vorzugsweise optisch. Vorzugsweise weist die zweite Messeinrichtung 14 einen Maßstab 14A und einen zugeordneten Sensor oder Lesekopf 14B auf, wie in Fig. 3 angedeutet. Der Maßstab 14A ist vorzugsweise am Ausgleichskörper 11, insbesondere Führungsabschnitt 11B, angeordnet.

Die zweite Messeinrichtung 14 kann alternativ oder zusätzlich auch einen Näherungsschalter 14C aufweisen, insbesondere wie in Fig. 2 angedeutet, besonders bevorzugt um für Kalibrierungszwecke eine bestimmte Lage oder Endlage des Ausgleichsköpers 11 und damit des Maßstabs 14A erfassen zu können.

Der Linearantrieb 2 weist vorzugsweise eine erste Lagerung 15 und eine dazu axial beabstandete zweite Lagerung 16 für den Läufer 9 auf. Die erste Lagerung 15 ist vorzugsweise werkzeugnah bzw. benachbart zum Werkzeug 8 angeordnet. Die erste Lagerung 15 greift vorzugsweise am Läuferabschnitt 9A an.

Die zweite Lagerung 16 ist vorzugsweise am hinteren Ende bzw. an dem werkzeugfernen Ende des Läufers 9 angeordnet. Die zweite Lagerung 16 greift vorzugsweise am Führungsabschnitt 9B an.

Beim Darstellungsbeispiel lagert die erste Lagerung 15 den Läufer 9 bzw. Läuferabschnitt 9A derart, dass der Läufer 9 axial beweglich, also in Z-Richtung bewegbar, ist, aber sich nicht verdrehen kann, also torsionssteif geführt wird.

Die zweite Lagerung 16 lagert vorzugsweise den Läufer 9 bzw. Führungsabschnitt 9B derart, dass der Läufer 9 axial beweglich, also in Z-Richtung bewegbar, ist, aber sich auch verdrehen kann. Der Läufer 9 bzw. Führungsabschnitt 9B wird also torsionsmäßig oder rotatorisch nicht geführt.

Insbesondere ist der Läufer 9 luftgelagert.

Beim Darstellungsbeispiel weist die erste Lagerung 15 ein oder mehrere Luftlagerelemente 15A auf, die den Läufer 9 bzw. Läuferabschnitt 9A - besonders bevorzugt im Bereich zweier im Stirnschnitt diagonal gegenüberliegender Eckbereiche - führen. Die Luftlagerelemente 15A sind vorzugsweise von einem zugeordneten Lagerabschnitt oder Lagerrahmen 15B stationär gehalten bzw. getragen, wie in Fig. 3 angedeutet.

Der Lagerrahmen 15B ist vorzugsweise fest von dem Gehäuse 2A bzw. Gehäuseteil 2C gehalten oder fest damit verbunden.

Besonders bevorzugt trägt das Gehäuse 2A oder der Lagerrahmen 15B den Sensor bzw. Lesekopf 13B der ersten Messeinrichtung 13. Der Sensor bzw. Lesekopf 14B der zweiten Messeinrichtung 14 ist beim Darstellungsbeispiel vorzugsweise am Gehäuse 2A angebracht.

Die zweite Lagerung 16 weist vorzugsweise mindestens ein Luftlagerelement 16A auf, das besonders bevorzugt von dem Träger 2B getragen oder gehalten ist, insbesondere in den Träger 2B eingesetzt ist, wie in Fig. 2 angedeutet. Das Luftlagerelement 16A ist vorzugsweise hülsenförmig oder hohlzylindrisch ausgebildet. Beim Darstellungsbeispiel wird es von dem Läufer 9 bzw. Führungsabschnitt 9B durchgriffen.

Der Linearantrieb 2 weist vorzugsweise eine dritte Lagerung 17 zur axial beweglichen Lagerung des Ausgleichskörpers 11 auf. Vorzugsweise ist der Ausgleichskörper 11 ebenso wie der Läufer 9 luftgelagert. Die dritte Lagerung 17 weist daher vorzugsweise ein oder mehrere Luftlagerelemente 17A auf.

Im Gegensatz zu der ersten und zweiten Lagerung 15 und 16 sind bei der dritten Lagerung 17 die Luftlagerelemente 17A nicht stationär, sondern vorzugsweise zusammen mit dem Ausgleichskörper 11 beweglich angeordnet, also insbesondere von dem Ausgleichskörper 11 bzw. dessen Körperabschnitt 11A getragen. Insbesondere sind die Luftlagerelemente 17A beim Darstellungsbeispiel im Bereich zweier diametral gegenüberliegender Eckbereiche der zentralen Durchbrechung 11C angeordnet, wie in Fig. 3 angedeutet. Jedoch sind auch andere Konfigurationen und Anordnungen möglich.

Den Luftlagerelementen 17A ist ein Lagerabschnitt 17B zur Bildung von Gegenlagerflächen zugeordnet. Der Lagerabschnitt 17B weist vorzugsweise eine zumindest im Wesentlichen polygonale, rechteckige oder quadratische Außenkontur in Stirnansicht auf und bildet mit seinem flachen Außenflächen passende Gegenlagerflächen für die zugeordneten Luftlagerelemente 17A. Der Lagerabschnitt 17B ist beim Darstellungsbeispiel vorzugsweise von dem Gehäuse 2A bzw. Gehäuseteil 2C oder Träger 2B gehalten. Jedoch sind auch andere konstruktive Lösungen möglich.

Die Luftlagerelemente 15A, 16A und 17A sind vorzugsweise padartig ausgebildet und/oder mit Vertiefungen an ihren Lagerseiten versehen, die über nicht dargestellte Leitungen mit unter Druck stehendem Gas bzw. Druckluft versorgt bzw. beaufschlagt werden, so dass zwischen dem jeweiligen Luftlagerelement 15A, 16A und 17A einerseits und der zugeordneten Gegenlagerfläche andererseits bei entsprechendem Gasdruck ein Spalt, insbesondere Luftpolster gebildet wird. Insbesondere wird zwischen jedem Luftlagerelement 15A und dem Läufer 9 oder Läuferabschnitt 9A, zwischen dem Luftlagerelement 16A und dem Läufer 9 bzw. Führungsabschnitt 9B und/oder zwischen jedem Luftlagerelement 17A und dem Lagerabschnitt 17B bei entsprechendem Gasdruck ein Spalt gebildet. Dementsprechend sind der Läufer 9 und das Ausgleichsgewicht 11 quasi reibungsfrei axial bewegbar.

Die vorschlagsgemäße Luftlagerung gestattet eine sehr leichte und/oder torsionsfreie Bewegung des Läufers 9.

Die vorschlagsgemäße Lösung gestattet einen sehr kompakten Aufbau, insbesondere des Läufers 9 und des Linearantriebs 2.

Die vorschlagsgemäße Lösung gestattet eine sehr leichte Realisierung des Läufers 9 und dementsprechend schnelle Bewegungen.

Vorschlagsgemäß wird eine dynamische Massenkompensation bzw. Kompensation von Reaktionskräften bei sehr kompaktem Aufbau ermöglicht.

Insbesondere ist der Läuferantrieb 10 oder dessen Spule 10A zwischen den Lagerungen 15 und 16 angeordnet.

Insbesondere erstreckt sich der Läufer 9 oder dessen Führungsabschnitt 9B in den Läuferantrieb 10 oder durch diesen hindurch.

Insbesondere erstreckt sich der Läufer 9 oder dessen Führungsabschnitt 9B in den Ausgleichsantrieb 12 oder durch diesen hindurch.

Insbesondere erstreckt sich der Läufer 9 oder dessen Führungsabschnitt 9B in die Magnetanordnung 10B, 12B des Läuferantriebs 10 und/oder Ausgleichsantriebs 12 oder durch diese(n) hindurch.

Insbesondere erstreckt sich der Läufer 9 oder dessen Führungsabschnitt 9B in die Spule 10A, 12A des Läuferantriebs 10 und/oder Ausgleichsantriebs 12 oder durch diese(n) hindurch.

Der Linearantrieb 2 weist vorzugsweise eine Hubbegrenzungseinrichtung 9D zur Begrenzung des axialen Hubs bzw. der axialen Bewegung des Läufers 9 und/oder eine Hubbegrenzungseinrichtung 11D zur Begrenzung des axialen Hubs bzw. der axialen Bewegung des Ausgleichskörpers 11 auf, wie in Fig. 2 angedeutet.

Vorzugsweise greift die Hubbegrenzungseinrichtung 9D am Läuferabschnitt 9A an oder ein.

Beim Darstellungsbeispiel weist die Hubbegrenzungseinrichtung 9D mindestens einen Bolzen oder mindestens eine Schraube, insbesondere zwei Bolzen oder Schrauben auf, die in entsprechende Ausnehmungen 9E des Läufers 9 bzw. Läuferabschnitts 9A eingreifen, wobei die axiale Länge der Ausnehmungen 9E derart gewählt ist, dass der gewünschte axiale Hub des Läufers 9 ermöglicht wird. Jedoch sind auch andere konstruktive Lösungen möglich.

Die Hubbegrenzungseinrichtung 11D ist beim Darstellungsbeispiel vorzugsweise an einer Stirnseite des Gehäuses 2A angebracht und/oder durchgreift den Ausgleichskörper 11 bzw. dessen Führungsabschnitt 11B bzw. eine entsprechende Bohrung axial, wie in Fig. 3 schematisch angedeutet. Jedoch sind auch andere konstruktive Lösungen möglich.

Das Gehäuse 2A ist vorzugsweise zumindest weitestgehend geschlossen, insbesondere zum Schutz gegen Verschmutzung.

Werkzeugsseitig ist vorzugsweise ein Balg 9F, insbesondere ein Faltenbalg oder dgl., zur Abdichtung zwischen dem Läufer 9 bzw. Läuferabschnitt 9A einerseits und dem Gehäuse 2A bzw. Lagerrahmen 15B andererseits angeordnet. Jedoch sind auch andere konstruktive Lösungen möglich.

Der Linearantrieb 2 bzw. dessen Gehäuse 2A, Gehäuseteil 2C und/oder Träger 2B weist bzw. weisen vorzugsweise interne Kühlkanäle (nicht dargestellt) auf.

**Bezugszeichenliste**

| | | | |
|---|---|---|---|
| 1 | Vorrichtung | 11D | Hubbegrenzungseinrichtung |
| 2 | Linearantrieb | 12 | Ausgleichsantrieb |
| 2A | Gehäuse | 12A | Spule |
| 2B | Träger | 12B | Magnetanordnung |
| 2C | Gehäuseteil | 12C | Permanentmagnet |
| 3 | Werkstück | 12D | Polscheibe |
| 3A | Flachseite | 12E | Ringraum |
| 4 | Werkstückspindel | 13 | erste Messeinrichtung |
| 5 | Aufnahme | 13A | Maßstab |
| 6 | Halter | 13B | Lesekopf |
| 7 | Steuereinrichtung | 13C | Näherungsschalter |
| 8 | Werkzeug | 14 | zweite Messeinrichtung |
| 8A | Aufnahme | 14A | Maßstab |
| 9 | Läufer | 14B | Lesekopf |
| 9A | Läuferabschnitt | 14C | Näherungsschalter |
| 9B | Führungsabschnitt | 15 | erste Lagerung |
| 9C | Verbindungsplatte | 15A | Luftlagerelement |
| 9D | Hubbegrenzungseinrichtung | 15B | Lagerrahmen |
| 9E | Ausnehmung | 16 | zweite Lagerung |
| 9F | Balg | 16A | Luftlagerelement |
| 10 | Läuferantrieb | 17 | dritte Lagerung |
| 10A | Spule | 17A | Luftlagerelement |
| 10B | Magnetanordnung | 17B | Lagerabschnitt |
| 10C | Permanentmagnet | | |
| 10D | Polscheibe | C | Rundachse |
| 10E | Ringraum | W | Linearachse |
| 11 | Ausgleichskörper | X | Linearachse |
| 11A | Körperabschnitt | Y | Linearachse |
| 11B | Führungsabschnitt | Z | Linearachse |
| 11C | Durchbrechung | | |

## Patentansprüche

1. Linearantrieb (2) zur vorzugsweise spanenden bzw. drehenden Bearbeitung eines vorzugsweise optischen Werkstücks (3), insbesondere einer optischen Flachseite (3A), mittels eines Werkzeugs (8), vorzugsweise durch Stirndrehen,
mit einem linear bewegbaren Läufer (9), der eine Aufnahme (8A) für das Werkzeug (8) trägt oder bildet, und
mit einem elektrischen, als Linearmotor ausgebildeten Läuferantrieb (10) zur Bewegung des Läufers (9),
wobei der Linearantrieb (2) eine erste, werkzeugnah angeordnete Lagerung (15) und eine axial beabstandete zweite Lagerung (16) für den Läufer (9) aufweist,
**dadurch gekennzeichnet,**
**dass** die erste Lagerung (15) den Läufer (9) torsionssteif und die zweite Lagerung (16) den Läufer (9) drehbar lagert.

2. Linearantrieb nach Anspruch 1, **dadurch gekennzeichnet, dass** der Läuferantrieb (10) oder dessen Spule (10A) zwischen den Lagerungen (15, 16) angeordnet ist.

3. Linearantrieb nach Anspruch 1 oder 2, **dadurch gekennzeichnet, dass** die erste Lagerung (15) den Läufer (9) oder dessen Läuferabschnitt (9A) - bei insbesondere zumindest im wesentlichen quadratischem Querschnitt des Läufers (9) oder Läuferabschnitts (9A) - im Bereich zweier diametral gegenüberliegender Eckbereiche lagert.

4. Linearantrieb nach einem der voranstehenden Ansprüche, **dadurch gekennzeichnet, dass** der Läufer (9) einen Läuferabschnitt (9A) und einen sich axial anschließenden Führungsabschnitt (9B), insbesondere mit einem kleineren Durchmesser oder Querschnitt als der Läuferabschnitt (9A), aufweist.

5. Linearantrieb nach den Ansprüchen 1 und 4, **dadurch gekennzeichnet, dass** die erste Lagerung (15) den Läuferabschnitt (9A) und die zweite Lagerung (16) den Führungsabschnitt (9B) lagert.

6. Linearantrieb nach Anspruch 4 oder 5, **dadurch gekennzeichnet, dass** der Läuferabschnitt (9A) eine Spule (10A) des Läuferantriebs (10) und/oder die Aufnahme (8A) für das Werkzeug (8) trägt.

7. Linearantrieb nach einem der Ansprüche 4 bis 6, **dadurch gekennzeichnet, dass** der Läuferabschnitt (9A) einen zumindest im wesentlichen polygonalen oder rechteckigen, insbesondere zumindest im wesentlichen quadratischen Querschnitt aufweist.

8. Linearantrieb nach einem der Ansprüche 4 bis 7, **dadurch gekennzeichnet, dass** der Führungsabschnitt (9B) einen zumindest im Wesentlichen runden Querschnitt aufweist und/oder zylindrisch ausgebildet.

9. Linearantrieb nach einem der voranstehenden Ansprüche, **dadurch gekennzeichnet, dass** der Läufer (9) luftgelagert ist.

10. Linearantrieb nach einem der voranstehenden Ansprüche, **dadurch gekennzeichnet, dass** der Läuferantrieb (10) eine mit dem Läufer (9) verbundene Spule (10A) und eine stationäre Magnetanordnung (10B) aufweist.

11. Linearantrieb nach Anspruch 10, **dadurch gekennzeichnet, dass** sich der Läufer (9) in die Magnetanordnung (10B) oder durch diese hindurch erstreckt.

12. Linearantrieb nach Anspruch 10 oder 11, **dadurch gekennzeichnet, dass** die Spule (10A) thermisch und/oder elektrisch gegenüber dem Läufer (9) bzw. Läuferabschnitt (9A) isoliert ist.

13. Linearantrieb nach einem der voranstehenden Ansprüche, **dadurch gekennzeichnet, dass** sich der Läufer (9) in dem Läuferantrieb (10) oder durch diesen hindurch erstreckt.

14. Verwendung eines Linearantriebs (2) nach einem der vorstehenden Ansprüche zum spanenden Bearbeiten oder Stirndrehen eines vorzugsweise optischen Werkstücks (3), wobei das Werkstück (3) rotiert und abhängig von der Rotationslage des Werkstücks (3) ein Werkzeug (8) relativ zum Werkstück (3) mittels des Linearantriebs (2) bewegt oder zugestellt wird.

## Claims

1. Linear drive (2) for preferably machining or rotary working of a preferably optical workpiece (3), in particular an optical flat side (3A), by means of a tool (8), preferably by face turning,
with a linearly movable rotor (9) which bears or forms a fixture (8A) for the tool (8), and
with an electrical rotor drive (10) which is made as a linear motor for moving the rotor (9),
wherein the linear drive (2) has a first bearing arrangement (15) which is located near the tool (8) and an axially spaced second bearing arrangement (16) for the rotor (9),
**characterized in**
**that** the first bearing arrangement (15) mounts the rotor (9) in a torsionally stiff manner and the second bearing arrangement (16) pivotally mounts the rotor (9).

2. Linear drive according to Claim 1, **characterized in that** the rotor drive (10) or its coil (10A) is located between the bearing arrangements (15, 16).

3. Linear drive according to Claim 1 or 2, **characterized in that** the first bearing arrangement (15) mounts the rotor (9) or its rotor section (9A) - in case of in particular an at least essentially square cross section of the rotor (9) or rotor section (9A) - in the region of two diametrically opposite corner regions.

4. Linear drive according to one of the preceding claims, **characterized in that** the rotor (9) has a rotor section (9A) and an axially adjoining guide section (9B), especially with a smaller diameter or cross section than the rotor section (9A).

5. Linear drive according to Claims 1 and 4, **characterized in that** the first bearing arrangement (15) mounts the rotor section (9A) and the second bearing arrangement (16) mounts the guide section (9B).

6. Linear drive according to Claim 4 or 5, **characterized in that** the rotor section (9A) bears a coil (10A) of the rotor drive (10) and/or the fixture (8A) for the tool (8).

7. Linear drive according to one of Claims 4 to 6, **characterized in that** the rotor section (9A) has an at least essentially polygonal or rectangular, in particular at least essentially square cross section.

8. Linear drive according to one of Claims 4 to 7, **characterized in that** the guide section (9B) has an at least essentially round cross section and/or is made cylindrical.

9. Linear drive according to one of the preceding claims, **characterized in that** the rotor (9) is air-cushioned.

10. Linear drive according to one of the preceding claims, **characterized in that** the rotor drive (10) has a coil (10A) which is connected to the rotor (9), and a stationary magnet arrangement (10B).

11. Linear drive according to Claim 10, **characterized in that** the rotor (9) extends into or through the magnet arrangement (10B).

12. Linear drive according to Claim 10 or 11, **characterized in that** the coil (10A) is thermally and/or electrically insulated against the rotor (9) or rotor section (9A).

13. Linear drive according to one of the preceding claims, **characterized in that** the rotor (9) extends in or through the rotor drive (10).

14. Use of a linear drive (2) according to one of the preceding claims for machining or face turning of a preferably optical workpiece (3), the workpiece (3) rotating, and depending on the rotary position of the workpiece (3), a tool (8) being moved or fed relative to the workpiece (3) by means of the linear drive (2).

## Revendications

1. Entraînement linéaire (2) pour l'usinage de préférence par enlèvement de matière ou rotatif d'une pièce de préférence optique (3), notamment un côté plat (3A) optique, au moyen d'un outil (8), de préférence par rotation avant,
avec rotor mobile linéaire (9), qui supporte ou forme un logement (8A) pour l'outil (8) et
avec un entraînement de rotor électrique (10) formé comme un moteur linéaire, pour le déplacement du rotor (9),
l'entraînement linéaire (2) présentant un premier palier (15) disposé à proximité de l'outil et un second palier (16) espacé du premier au plan axial pour le rotor (9),
**caractérisé en ce**
**que** le premier palier (15) supporte le rotor (9) de manière rigide en torsion et le second palier (16) supporte le rotor (9) de manière rotative.

2. Entraînement linéaire selon la revendication 1, **caractérisé en ce que** l'entraînement de rotor (10) ou sa bobine (10A) est disposé entre les paliers (15, 16).

3. Entraînement linéaire selon la revendication 1 ou 2, **caractérisé en ce que** le premier palier (15) supporte le rotor (9) ou sa section de rotor (9A) - avec une section transversale au moins essentiellement quadratique du rotor (9) ou de la section de rotor (9A) - dans la zone de deux zones en coin diamétralement opposées.

4. Entraînement linéaire selon une des revendications précédentes, **caractérisé en ce que** le rotor (9) présente une section de rotor (9A) et une section de guidage (9B), qui se raccorde de manière radiale, notamment avec un diamètre ou une section transversale plus petit(e) que la section de rotor (9A).

5. Entraînement linéaire selon les revendication 1 et 4, **caractérisé en ce que** le premier palier (15) supporte la section de rotor (9A) et le second palier (16) supporte la section de guidage (9B).

6. Entraînement linéaire selon la revendication 4 ou 5, **caractérisé en ce que** la section de rotor (9A) porte une bobine (10A) de l'entraînement de rotor (10) et/ou le logement (8A) pour l'outil (8).

7. Entraînement linéaire selon une des revendications 4 à 6, **caractérisé en ce que** la section de rotor (9A) présente une section transversale au moins essentiellement polygonale ou rectangulaire, notamment au moins essentiellement quadratique.

8. Entraînement linéaire selon une des revendications 4 à 7, **caractérisé en ce que** la section de guidage (9B) présente une section transversale au moins essentiellement ronde et/ou de forme cylindrique.

9. Entraînement linéaire selon une des revendications précédentes, **caractérisé en ce que** le rotor (9) est supporté sur coussin d'air.

10. Entraînement linéaire selon une des revendications précédentes, **caractérisé en ce que** l'entraînement de rotor (10) présente une bobine (10A) reliée au rotor (9) et un ensemble aimant (10B) stationnaire.

11. Entraînement linéaire selon la revendication 10, **caractérisé en ce que** le rotor (9) s'étend dans l'ensemble aimant (10B) ou en traversant celui-ci.

12. Entraînement linéaire selon la revendication 10 ou 11, **caractérisé en ce que** la bobine (10A) est isolée thermiquement et/ou électriquement du rotor (9) ou de la section de rotor (9A).

13. Entraînement linéaire selon une des revendications précédentes, **caractérisé en ce que** le rotor (9) s'étend dans l'entraînement de rotor (10) ou en traversant celui-ci.

14. Utilisation d'un entraînement linéaire (2) selon une des revendications précédentes, pour l'usinage par enlèvement de matière ou rotation avant d'une pièce de préférence optique (3), la pièce (3) étant entraînée en rotation et un outil (8) étant déplacé ou réglé, indépendamment de la position de rotation de la pièce (3), par rapport à la pièce (3) au moyen de l'entraînement linéaire (2).
